# EUROPEAN PATENT APPLICATION

(11) **EP 0 894 529 A2**
(43) Date of publication of application: **03.02.1999**
(21) Application number: 98113370.5
(22) Date of filing: 17.07.1998
(51) Int. Cl.: B01J 31/16, C07F 15/00, C08L 83/04

(54) **Platinum complex catalyst composition containing long-chain alkyl-functional organosiloxane and method for the preparation thereof**

(30) Priority: 28.07.1997 JP 217194/97
(71) Applicant: Dow Corning Toray Silicone Company, Ltd., Chiyoda-ku, Tokyo 100-0005 (JP)
(72) Inventor: Saruyama, Toshio, Dow Corning Toray Silicone Comp., Ichihara-shi, Chiba-pref. (JP); Murakami, Fumito, Dow Corning Toray Silicone Comp., Ichihara-shi, Chiba-pref. (JP)
(74) Representative: Patentanwälte Sternagel & Fleischer

(57) **Abstract**

There is disclosed a very active platinum complex catalyst composition that is useful as a hydrosilylation catalyst for hydrocarbon polymers, said composition comprising:
a platinum compound in which a ligand is a long-chain alkyl-functional organosiloxane of the formula 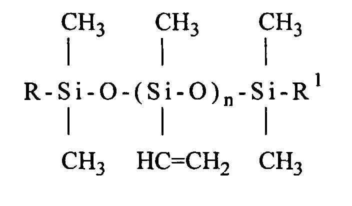 wherein R is C₄ to C₃₀ alkyl, R¹ is C₄ to C₃₀ alkyl or C₁ to C₃ alkyl, and **n** is from 1 to 10.

## Description

### Detailed Description of the Invention

### Field of the Invention

This invention relates to platinum complex catalyst compositions that are useful as catalysts that accelerate, for example, the hydrosilylation reaction, and to methods for the preparation of these platinum complex catalyst compositions. More particularly, this invention relates to a platinum complex catalyst composition that is well-suited for the purpose of accelerating the hydrosilylation reaction in non-organopolysiloxane polymers and particularly in hydrocarbon polymers, and to a method for the preparation of this platinum complex catalyst composition.

### Background of the Invention

A number of platinum complex catalyst compositions are already known within the sphere of catalysts for crosslinking polymers through the hydrosilylation reaction. Among these platinum complex catalyst compositions, the platinumalkenylsiloxane complex catalyst compositions produced by the reaction of alkenyl-functional siloxane and a platinum compound such as chloroplatinic acid, as disclosed in Japanese Patent Publication (Kokoku) Number Sho 42-22924(22,924/1967) and Japanese Patent Publication (Kokoku) Number Sho 46-28795(28,795/1971), have high catalytic activities and are useful as catalysts of the hydrosilylation reaction in organopolysiloxane compositions.

A polyisobutylene composition capable of undergoing crosslinking by the hydrosilylation reaction was reported in the 1980s (**Polymer Bulletin**, 18, 463(1987)). Unfortunately, this composition had a much slower cure rate than hydrosilylation-crosslinking curable organopolysiloxane compositions. To respond to this problem, Japanese Patent Application Laid Open (Kokai) Numbers Hei 2-75644(75,644/1990) and Hei 3-95266(95,266/1991), among others, teach methods that use SiH-functional compounds with special structures as the crosslinker. However, even these methods are unable to generate a satisfactory improvement in curability and as a consequence cannot provide polyisobutylene compositions with fast curing rates.

### Summary of the Invention

An object of the present invention is to provide a very catalytically active platinum complex catalyst composition that contains long-chain alkyl-functional vinylsiloxane. A particular object of the present invention is to provide a platinum complex catalyst composition containing long-chain alkyl-functional organosiloxane that is useful as a catalyst for the hydrosilylation reaction in hydrocarbon polymers. An additional object of the present invention is to provide a method for the preparation of the subject platinum complex catalyst composition containing long-chain alkyl-functional organosiloxane.

The aforesaid objects are achieved by a platinum complex catalyst composition containing long-chain alkyl-functional organosiloxane, characterized in that the primary component in said platinum complex catalyst composition is a platinum compound whose primary ligand is a long-chain alkyl-functional organosiloxane of the formula 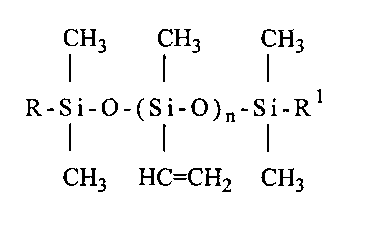 wherein R is C₄ to C₃₀ alkyl, R¹ is C₄ to C₃₀ alkyl or C₁ to C₃ alkyl, and **n** is from 1 to 10

### Detailed Description of the Invention

To explain the preceding in greater detail, the long-chain alkyl-functional organosiloxane of the formula 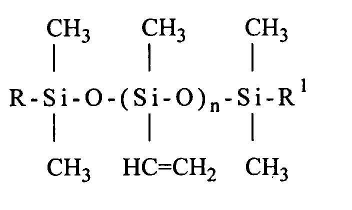 functions as a ligand that stabilizes the platinum atom in the composition according to the present invention. R in the preceding formula is a C₄ to C₃₀ alkyl, for example, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicocyl. The functionalities of the present invention ― and particularly its high catalytic performance in organic polymers ― do not appear when R contains fewer than 4 carbons. On the other hand, an acceptably high catalytic performance does not appear when R contains more than 30 carbons. R¹ can be C₄ to C₃₀ alkyl as described above for R or can be C₁ to C₃ alkyl, e.g., methyl, ethyl, or propyl, but is preferably C₄ to C₃₀ alkyl as described above for R. The subscript **n** is a number from 1 to 10. The subject organosiloxane may be a single compound with a specific value for **n** or may be a mixture of 2 or more compounds in which **n** is from 1 to 10.

The subject long-chain alkyl-functional organosiloxanes are specifically exemplified by compounds of the following formulas. 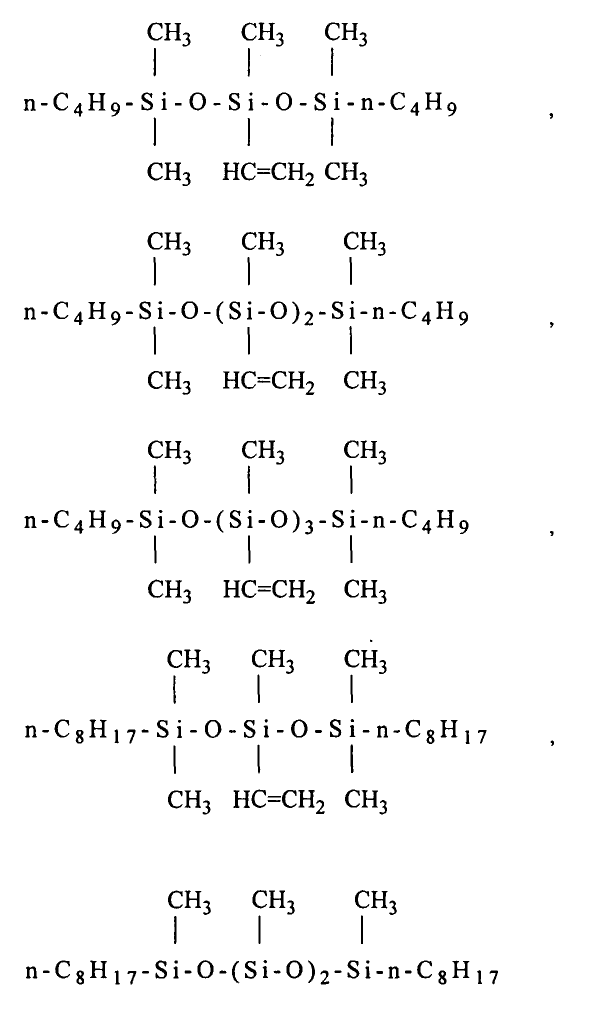 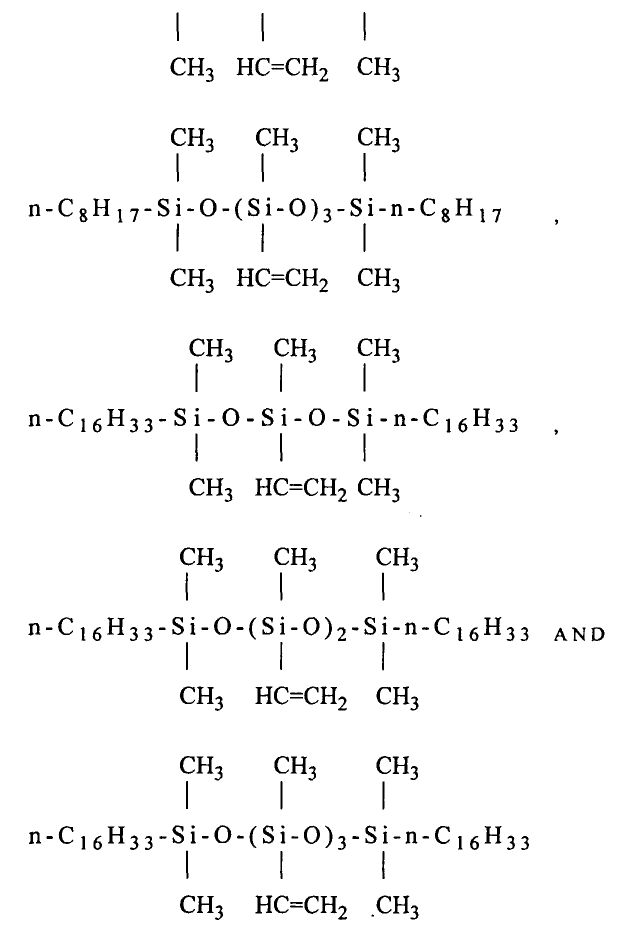 A facile method for synthesizing the subject long-chain alkyl-functional organosiloxanes consists of subjecting a cyclic siloxane composed of the methylvinylsiloxane unit (the main component will generally be the trimer to hexamer) and a long-chain alkyl-functional organodisiloxane of the formula 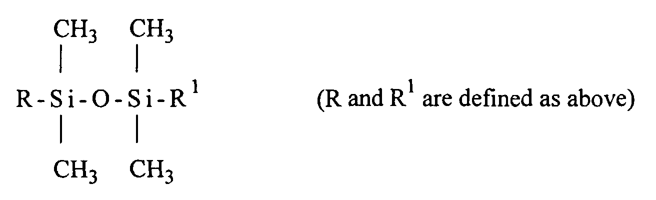 taken in suitable proportions to an acid- or base-catalyzed redistribution reaction. This method affords a mixture of long-chain alkyl-functional organosiloxanes with different degrees of polymerization. This mixture of long-chain alkyl-functional organosiloxanes can be used directly as the long-chain alkyl-functional organosiloxane in the present invention or can be used for this purpose after purification, e.g., by distillation, to remove component lacking the methylvinylsiloxane unit (the starting long-chain alkyl-functional disiloxane) and components with excessively high degrees of polymerization.

The platinum complex catalyst composition according to the present invention has as its primary component a platinum compound in which a ligand is the above-described long-chain alkyl-functional organosiloxane; however, this composition may also contain compounds capable of coordinating with the platinum atom other than the long-chain alkyl-functional organosiloxane. Compounds capable of coordinating with the platinum atom other than the long-chain alkyl-functional organosiloxane can be exemplified by organosiloxanes that have a high vinyl group density such as 1,3-divinyltetramethyldisiloxane and 1,3,5,7-tetravinyltetramethylcyclotetrasiloxane; nitrogenous compounds such as amines; phosphorus-containing compounds such as phosphines; sulfur-containing compounds; and halogen atoms such as chlorine. The permissible content of such compounds cannot be absolutely specified because it varies substantially as a function of the particular compound and the platinum complex catalyst composition. However, the content of these compounds on a molar basis preferably does not exceed 10-times the number of moles of platinum atoms in the composition and even more preferably does not exceed 4-times the number of moles of platinum atoms in the composition. The content of these compounds also preferably does not exceed the content of the long-chain alkyl-functional organosiloxane in the composition according to the present invention. The content of the platinum atom in the composition according to the present invention can be determined through such methods as atomic absorption analysis and x-ray fluorescence analysis. The content of the long-chain alkyl-functional organosiloxane and of compounds capable of coordinating with the platinum atom other than the long-chain alkyl-functional organosiloxane can be determined by such methods as nuclear magnetic resonance spectroscopic analysis and gas chromatographic analysis and through combinations of these analytic techniques.

In order to avoid impairing the storage stability of the platinum complex catalyst composition according to the present invention, the amount of vinyl in the long-chain alkyl-functional organosiloxane should be from 4 to 10,000 equivalents and is preferably from 4 to 5,000 equivalents, in each case referred to the platinum atom content.

The composition according to the present invention can be prepared by various methods, but a preferred method is by ligand exchange through the addition of the long-chain alkyl-functional organosiloxane to a platinum complex catalyst composition whose primary component is a heretofore known platinum complex. Platinum complex catalyst compositions can be exemplified by platinumdivinyltetramethyldisiloxane complexes, platinum-bis(cyclooctadiene) complexes, dichloroplatinum-cyclooctadiene complexes, platinum-bisphosphine-olefin complexes, and so forth. Since long-chain alkyl-functional organosiloxanes generally have high boiling points, ligand exchange can be carried out by adding the long-chain alkyl-functional organosiloxane to the platinum complex catalyst composition and then removing the low-boiling ligand component under reduced pressure.

The platinum complex catalyst composition according to the present invention is useful as a hydrosilylation catalyst. In general, it will be sufficient for the platinum to be present in the catalytic system at low concentrations of from several ppm to several hundred ppm. Therefore, in order to improve the dosing precision, it is recommended that the composition according to the present invention be diluted with a solvent after the ligand exchange. While this diluent should be able to dissolve the platinum complex catalyst composition according to the present invention and should not impair the catalytic activity, the nature of the diluent is not otherwise critical. However, dilution with a compound that is compatible with the reaction system in question, or with one component of the reaction system, is most preferred.

The platinum complex catalyst composition according to the present invention as described hereinabove, having as its primary component a platinum compound in which long-chain alkyl-functional organosiloxane is a ligand, is stable to long-term storage and does not break down when brought into contact with moisture or oxygen or even upon exposure to light. Moreover, because the organosiloxane ligand contains long-chain alkyl, the solubility is different from that of the heretofore known platinum catalysts whose primary component is a platinum-divinyltetraorganodisiloxane complex. As a result of these features the platinum complex catalyst composition according to the present invention can exhibit high activity as a hydrosilylation reaction catalyst in reaction systems in which the heretofore known platinum complex catalyst compositions have been unable to develop an acceptable catalytic activity, for example, in non-organopolysiloxane hydrocarbon polymer compositions and particularly in polyisobutylene compositions.

### Examples

The invention is explained in greater detail below through working examples. In these examples the values reported for viscosity were measured at 25°C; % indicates percent by weight; and Oct, Me, and Vi occurring in the chemical formulas represent, octyl, methyl, and vinyl, respectively.

### Reference Example 1

### Synthesis of α,ω-di(n-octyl)methylvinylsiloxane

73.9 g of 1,3-di(n-octyl)tetramethyldisiloxane and 40.6 g of methylvinylsiloxane cyclic (tetramer) were introduced into a 300-mL reactor. 1.1 g of cation exchange resin (product name: Diaion RCP-150HD, from Mitsubishi Kagaku Kabushiki Kaisha) was added and a reaction was carried out at 70°C. Samples were taken at intervals and the component proportions were measured by gas chromatography. The reaction was terminated by cooling after two hours had elapsed in which the values remained constant. The reaction mixture was first filtered to remove the ion exchange resin and the high molecular weight components were then removed by reprecipitation. The results of analysis of the reaction product by infrared absorption spectroscopy, NMR, and gas chromatography confirmed the product to be α,ω-di(n-octyl)methylvinylsiloxane with the component proportions and structure given below.

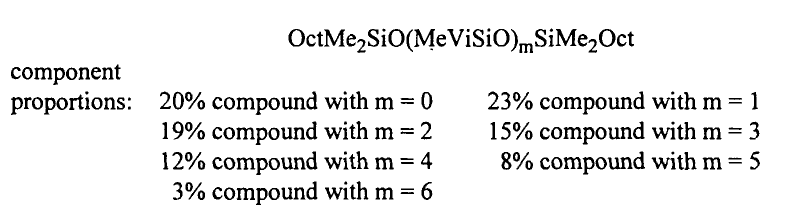

### Example 1

10.0 g of the α,ω-di(n-octyl)methylvinylsiloxane prepared in Reference Example 1 was added to 10.0 g of a transparent and pale yellow toluene solution that contained 1,3-divinyltetramethyldisiloxane and platinum-1,3-divinyltetramethyldisiloxane complex and in which the 1,3-divinyltetramethyldisiloxane content as measured by gas chromatography was 6.8% and the platinum content was 2.0%. Volatile components were then removed under a vacuum at temperatures not exceeding 50°C. Samples were taken at intervals and the remaining quantity of 1,3-divinyltetramethyldisiloxane was checked by gas chromatography. After 7 hours it was found that 1,3-divinyltetramethyldisiloxane could no longer be detected and the vacuum distillation operation was halted. The yield of the reaction product was 10.4 g and the platinum content was 2.0% as measured by x-ray fluorescence analysis. The component proportions for the α,ω-di(n-octyl)methylvinylsiloxane as measured by gas chromatography were as follows.

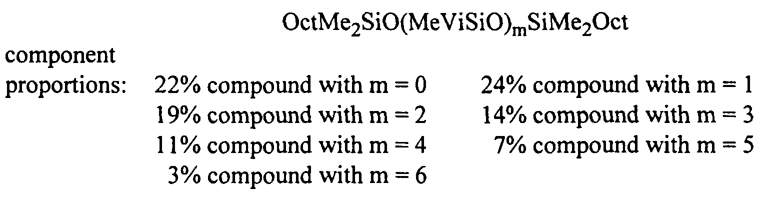

This composition was diluted with liquid paraffin (viscosity = 50 centistokes) to give a platinum complex catalyst composition that contained 0.025% platinum and had an α,ω-di(n-octyl)methylvinylsiloxane as a ligand.

### Reference Example 2

A platinum complex catalyst composition was prepared in this case again starting from the same starting material as used in Example 1, i.e., the transparent and pale yellow toluene solution that contained 1,3-divinyltetramethyldisiloxane and platinum-1,3-divinyltetramethyldisiloxane complex and in which the 1,3-divinyltetramethyldisiloxane content as measured by gas chromatography was 6.8% and the platinum content was 2.0%. This starting material was diluted with liquid paraffin having a viscosity of 50 centistokes to give a platinum complex catalyst composition that contained 0.025% platinum and had 1,3-divinyltetramethyldisiloxane as a ligand.

### Example 2

100 g of polyisobutylene (molecular weight = 5,000) having allyl terminal groups was mixed with 100 g of a liquid paraffin (plasticizer) having a viscosity of 50 centistokes. Into the resulting mixture was thoroughly mixed 1.72 g of diorganosiloxane (crosslinker) having on average the formula 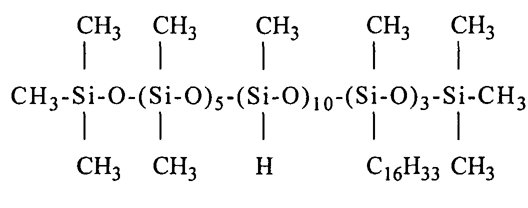 and 0.08 g of 3,5-dimethyl-l-hexyn-3-ol (cure rate adjuster). A curable polyisobutylene composition was then prepared by admixing 4 g of the platinum complex catalyst composition having an α,ω-di(n-octyl)methylvinylsiloxane ligand component as prepared in Example 1 and defoaming. The curing characteristics of this composition at 150°C were measured using a Curastometer Model V from Nichiai Shoji Kabushiki Kaisha (Japan). The time required for the torque to begin to rise was 23 seconds; the time required for the torque to reach 90% of the final torque was 30 seconds; and the maximum torque was 3.4 kg·cm.

### Comparative Example 1

A curable polyisobutylene composition was prepared as in Example 2, but in this case admixing the platinum complex catalyst prepared in Reference Example 2 in place of the platinum complex catalyst composition having an α,ω-di(n-octyl)methylvinylsiloxane ligand component as prepared in Example 1. The curing characteristics of this composition at 150°C were also measured using a Curastometer Model V. The time required for the torque to begin to rise was 24 seconds and the time required for the torque to reach 90% of the final torque was 30 seconds, results which were in each case in close agreement with Example 2. However, the maximum torque achieved was only 1.4 kg·cm. The results in Example 2 and Comparative Example 1 confirm that use of the platinum complex catalyst composition containing long-chain alkyl-functional organosiloxane provided a substantial improvement in polyisobutylene curability.

## Claims

1. A platinum complex catalyst composition comprising a platinum compound having a long-chain alkyl-functional organosiloxane ligand of the formula 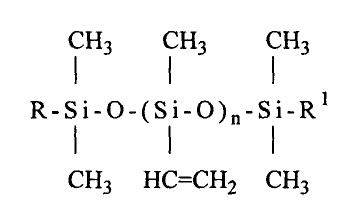 wherein R is C₄ to C₃₀ alkyl, R¹ is C₄ to C₃₀ alkyl or C₁ to C₃ alkyl, and **n** is from 1 to 10, with the proviso that the vinyl group in said long-chain alkyl-functional organosiloxane is present at from 4 to 10,000 equivalents referred to the platinum atom content.

2. The platinum complex catalyst composition afforded by diluting the platinum complex catalyst composition according to Claim 1 with a liquid paraffin.

3. The platinum complex catalyst composition of Claim 1, further comprising a curable composition that crosslinks via a hydrosilylation reaction.

4. The platinum complex catalyst composition of Claim 5 in which the curable composition that crosslinks via the hydrosilylation reaction is based on a curable hydrocarbon polymer.

5. The platinum complex catalyst composition of Claim 3 in which the curable composition is a polyisobutylene composition.

6. The platinum complex catalyst composition of Claim 4 in which the curable composition is a polyisobutylene composition.

7. A method for the preparation of a platinum complex catalyst composition comprising:
(I) mixing a long-chain alkyl-functional organosiloxane of the formula 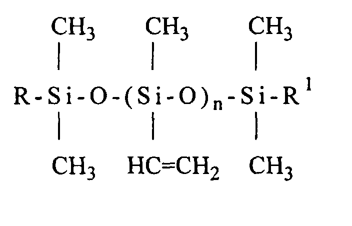 wherein R is C₄ to C₃₀ alkyl, R¹ is C₄ to C₃₀ alkyl or C₁ to C₃ alkyl, and **n** is from 1 to 10,
into a platinum-divinyltetraorganodisiloxane composition whose primary component is a platinum-divinyltetraorganodisiloxane complex wherein said long-chain alkyl-functional organosiloxane is admixed in a quantity that provides 4 to 10,000 equivalents of vinyl groups for each platinum atom; and
(II) thereafter removing the divinyltetraorganodisiloxane.
